# EUROPÄISCHE PATENTSCHRIFT

(11) **EP 3 411 527 B1**
(45) Veröffentlichungstag und Bekanntmachung des Hinweises auf die Patenterteilung: **11.03.2020**
(21) Anmeldenummer: 17700190.6
(22) Anmeldetag: 09.01.2017
(51) Int. Cl.: E01B 29/46, B23K 11/00, B23K 31/02, B23K 101/26

(54) **SCHWEISSAGGREGAT ZUM VERSCHWEISSEN VON SCHIENEN EINES GLEISES**
WELDING APPARATUS FOR WELDING RAILS OF A TRACK
UNITÉ DE SOUDAGE DESTINÉE AU SOUDAGE DES RAILS D'UNE VOIE

(30) Priorität: 04.02.2016 AT 562016
(43) Veröffentlichungstag der Anmeldung: 12.12.2018
(73) Patentinhaber: Plasser & Theurer Export von Bahnbaumaschinen GmbH, 1010 Wien (AT)
(72) Erfinder: FLETZER, Robert, 2331 Vösendorf (AT); MÜHLLEITNER, Heinz, 3100 Neidling (AT)
(86) Internationale Anmeldenummer: PCT/EP2017/000018
(87) Internationale Veröffentlichungsnummer: WO 2017/133828

(56) Entgegenhaltungen:
- EP-B1- 2 315 877
- WO-A1-2004/111340
- WO-A1-2010/063362
- CN-A- 103 817 422
- GB-A- 2 219 761
- US-A1- 2002 125 216

## Beschreibung

Die Erfindung betrifft ein Schweißaggregat zum Verschweißen von Schienen eines Gleises, mit zwei entlang von Aggregatführungen in einer Führungslängsrichtung zueinander bewegbaren Schweißeinheiten, die an einem unteren Ende jeweils mit zur Anlage an einen Schienensteg vorgesehenen Klemmbacken ausgestattet sind, wobei wenigstens eine Schweißeinheit mit einer im Arbeitseinsatz zur Auflage auf dem Gleis vorgesehenen, relativ zur Schweißeinheit verschiebbaren Abstützvorrichtung verbunden ist.

Ein derartiges Schweißaggregat ist durch die WO 2010063362 bekannt. Auf jeder der beiden zueinander bewegbaren Schweißeinheiten sind zwei linear in einer Anpressebene normal zur Schienenlängsrichtung verschiebbare Klemmbacken für eine Anpressung an den Schienensteg vorgesehen.

Ein weiteres Schweißaggregat ist aus GB 2 219 761 A bekannt. Dieses weist insgesamt vier, als hydraulische Abstützstempel ausgebildete Abstützvorrichtungen auf.

Gemäß EP 0 597 215 A1 bzw. CH 703 854 A2 sind ebenfalls Schweißaggregate bekannt, bei denen die Klemmbacken durch Verdrehen einer Exzenterwelle an den Schienensteg angepresst werden.

Die Aufgabe der vorliegenden Erfindung liegt nun in der Schaffung eines Schweißaggregates der eingangs genannten Art, mit dem eine vereinfachte Durchführung des Schweißvorganges möglich ist.

Diese Aufgabe wird erfindungsgemäß mit einem Schweißaggregat der gattungsgemäßen Art dadurch gelöst, dass die Abstützvorrichtung in Führungslängsrichtung relativ zur Schweißeinheit verschiebbar ausgebildet ist.

Durch eine derartige Abstützvorrichtung ist es möglich, für die Bewegung des Schweißaggregates zur Schweißstelle einen kleineren Kran einzusetzen, da die durch die Spannungen der angehobenen Schienen während des Schweißprozesses erzeugten Kräfte in vorteilhafter Weise durch die Abstützvorrichtung direkt auf das Gleis übertragen werden. Außerdem können die Abstützvorrichtungen im Falle einer schlittenartigen Ausbildung auch eine während einer Bewegung der beiden Schweißeinheiten zueinander mögliche nachteilige Reibung des Schweißaggregates mit den Schwellen zuverlässig ausschließen. Ein weiterer Vorteil der Erfindung besteht darin, dass eine rasche - für den Kran belastungsfreie - Anhebung des Schweißaggregates zur Durchführung einer abschließenden Schweißwulstentfernung lediglich im unbedingt erforderlichen Ausmaß möglich ist, so dass ein Abschermesser ungehindert unterhalb eines Schienenfußes bewegbar ist.

Weitere Vorteile der Erfindung ergeben sich aus den Unteransprüchen und der Zeichnungsbeschreibung.

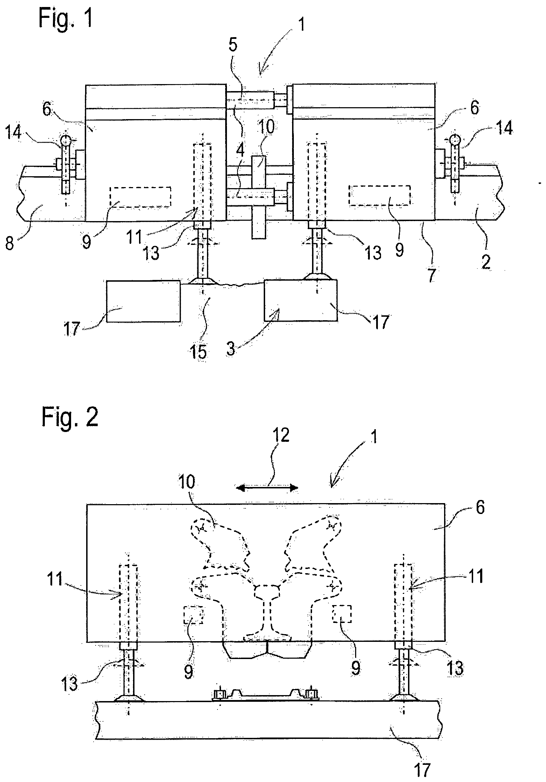

Im Folgenden wird die Erfindung anhand in der Zeichnung dargestellter Ausführungsbeispiele näher beschrieben. Es zeigen: Fig. 1, 3 und 4 je eine vereinfachte Seitenansicht eines Schweißaggregates, Fig. 2 eine Ansicht in einer Schienenlängsrichtung.

Ein in Fig.1 und 2 dargestelltes Schweißaggregat 1 zum Verschweißen von Schienen 2 eines Gleises 3 setzt sich aus zwei entlang von Aggregatführungen 4 in einer Führungs- bzw. Schienenlängsrichtung 5 zueinander bewegbaren Schweißeinheiten 6 zusammen. Diese sind an einem - bezüglich einer Vertikalen - unteren Ende 7 jeweils mit zur Anlage an einen Schienensteg 8 vorgesehenen Klemmbacken 9 ausgestattet. Zwischen den beiden Schweißeinheiten 6 befindet sich eine Abschervorrichtung 10 zum Abscheren eines Schweißwulstes. Das in weiteren Einzelheiten durch EP 2 315 877 B1 bereits bekannte und daher nicht näher beschriebene Schweißaggregat 1 ist für einen Transport zur Schweißstelle mit einem hier nicht näher dargestellten Kran (s. Fig. 3) verbunden.

Beide Schweißeinheiten 6 sind jeweils mit zwei am unteren, an die Klemmbacken 9 anschließenden Ende 7 mit einer im Arbeitseinsatz zur Auflage auf dem Gleis 3 vorgesehenen Abstützvorrichtungen 11 verbunden. Diese sind in einer normal zur Führungslängsrichtung 5 verlaufenden Aggregatquerrichtung 12 voneinander distanziert angeordnet, wobei die Klemmbacken 9 jeweils zwischen den beiden Abstützvorrichtungen 11 positioniert sind. Jede der Abstützvorrichtungen 11 ist als bezüglich einer Vertikalen relativ zur Schweißeinheit 6 hydraulisch verstellbarer Abstützstempel 13 ausgebildet.

Für den Schweißvorgang wird das Schweißaggregat 1 über den beiden zu verschweißenden Schienen 2 zentriert und soweit abgesenkt, dass die beiden Schweißeinheiten 6 für den Schweißvorgang ungehindert zueinander bewegbar sind. Als Nächstes werden die Schienen 2 durch zwei Schienenzangen 14 erfasset und geringfügig angehoben. Dabei werden die Schienen 2 an einen zwischen den Klemmbacken 9 positionierten Anschlag angepresst.

Nach Beendigung des Schweißvorganges werden die Abstützstempel 13 hydraulisch beaufschlagt und in vertikaler Richtung ausgefahren, um schließlich das Schweißaggregat 1 auf den Schwellen und/oder dazwischen befindlichem Schotter 15 abzustützen. Das Schweißaggregat 1 wird dabei in vertikaler Richtung nur soweit vom Gleis 3 distanziert, bis die beiden abgesenkten Teile der Abschervorrichtung 10 problemlos unterhalb des Schienenfußes für den folgenden Abschervorgang des Schweißwulstes zusammenklappbar sind. Dabei verbleibt die Schiene 2 in einem durch die Klemmbacken 9 eingeklemmten Zustand. Die daraus aus der Schienenbiegung resultierenden Kräfte werden somit unter Entlastung des genannten Kranes durch die Abstützstempel 13 aufgenommen.

In einer alternativen Minimalvariante wäre es aber auch möglich, lediglich an einer der beiden Schweißeinheiten 6 zwei Abstützstempel 13 anzuordnen.

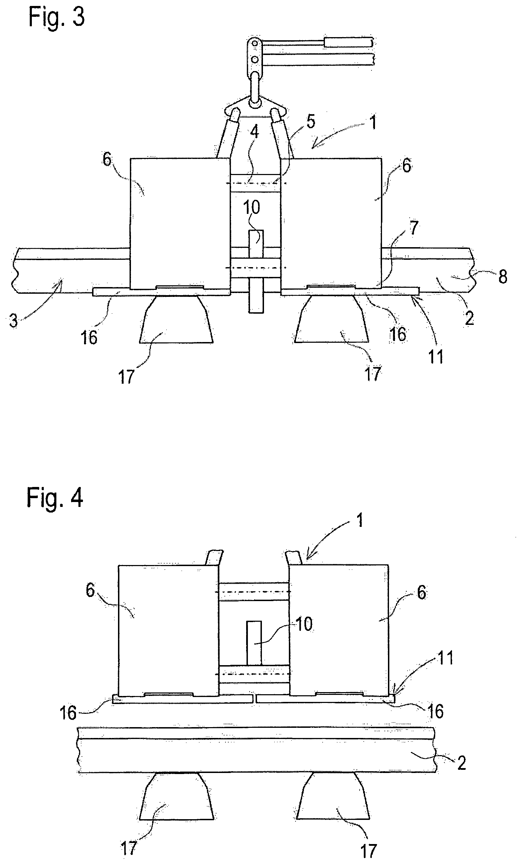

In den Fig. 3 und 4 ist eine weitere Variante der Abstützvorrichtung 11 dargestellt, die insbesondere an einen anderen Typ eines Schweißaggregates 1 (s. dazu WO 2004/111340) angepasst ist.

Diese als Gleitschiene 16 ausgebildete Abstützvorrichtung 11 ist in Führungslängsrichtung 5 relativ zur Schweißeinheit 1 verschiebbar ausgebildet. Die Gleitschiene 16 ist durch Federvorspannung selbsttätig von einer mit Beendigung eines Schweißvorganges erreichbaren Endposition (s. Fig.3) in eine Ausgangsposition (s. Fig.4) zurückverschiebbar. Ein durch die Ausgangs- und Endposition begrenzter Verschiebeweg beträgt wenigstens 150 mm. Eine in der Führungslängsrichtung 5 verlaufende Länge der Ab-stützvorrichtung 11 bzw. Gleitschiene 16 ist wenigstens entsprechend einem Abstand zweier benachbarter Schwellen 17 des Gleises 3 zueinander ausgebildet.

Zur Durchführung einer Schweißung wird das Schweißaggregat 1 - nach Zentrierung bezüglich der Schienenlängsrichtung - unter Auflage der insgesamt vier Gleitschienen 16 auf die Schwellen 17 aufgesetzt. Dabei befinden sich die Gleitschienen 16 in der in Fig. 4 ersichtlichen Ausgangsposition. Zur Durchführung des die Schweißung abschließenden Stauchschlages werden die beiden Schweißeinheiten 6 entlang der Aggregatführung 4 zueinander bewegt, wobei es jeweils zu einer Relativverschiebung zwischen Gleitschienen 16 und Schweißeinheit 6 kommt. Die dadurch erreichte Endposition ist in Fig. 3 ersichtlich. Es versteht sich von selbst, dass dazu die Höhe der Gleitschienen 16 derart ausgebildet sein muss, dass eine ungehinderte Verschiebung der Schweißeinheiten 6 über die hier nicht näher dargestellten Schienenbefestigungen möglich ist. Nach der Abscherung des Schweißwulstes erfolgt durch den Kran ein Anheben des Schweißaggregates 1, wobei die Gleitschienen 16 infolge der Federvorspannung selbsttätig in ihre Ausgangsposition verschoben werden (s. Fig.4).

## Patentansprüche

1. Schweißaggregat (1) zum Verschweißen von Schienen (2) eines Gleises, mit zwei entlang von Aggregatführungen (4) in einer Führungslängsrichtung (5) zueinander bewegbaren Schweißeinheiten (6), die an einem unteren Ende (7) jeweils mit zur Anlage an einen Schienensteg (8) vorgesehenen Klemmbacken (9) ausgestattet sind, wobei wenigstens eine Schweißeinheit (6) mit einer im Arbeitseinsatz zur Auflage auf dem Gleis (3) vorgesehenen, relativ zur Schweißeinheit (6) verschiebbaren Abstützvorrichtung (11) verbunden ist, **dadurch gekennzeichnet, dass** die Abstützvorrichtung (11) in Führungslängsrichtung (5) relativ zur Schweißeinheit (6) verschiebbar ausgebildet ist.

2. Schweißaggregat nach Anspruch 1, **dadurch gekennzeichnet, dass** die Abstützvorrichtung (11) jeweils am unteren, an die Klemmbacken (9) anschließenden Ende (7) jeder Schweißeinheit (6) befestigt ist.

3. Schweißaggregat nach Anspruch 1 oder 2, **dadurch gekennzeichnet, dass** jede Schweißeinheit (6) zwei bezüglich einer normal zur Führungslängsrichtung (5) verlaufenden Aggregatquerrichtung (12) voneinander distanzierte Abstützvorrichtungen (11) aufweist, wobei die Klemmbacken (9) zwischen den beiden Abstützvorrichtungen (11) angeordnet sind.

4. Schweißaggregat nach einem der Ansprüche 1 bis 3, **dadurch gekennzeichnet, dass** die Abstützvorrichtung (11) als Gleitschiene (16) ausgebildet ist, die durch Federvorspannung selbsttätig von einer mit Beendigung eines Schweißvorganges erreichbaren Endposition in eine Ausgangsposition zurückverschiebbar ist.

5. Schweißaggregat nach Anspruch 4, **dadurch gekennzeichnet, dass** ein durch Ausgangs- und Endposition begrenzter Verschiebeweg wenigstens 150 mm beträgt.

6. Schweißaggregat nach einem der Ansprüche 4 oder 5, **dadurch gekennzeichnet, dass** eine in der Führungslängsrichtung (5) verlaufende Länge der Abstützvorrichtung (11) wenigstens einem Abstand zweier benachbarter Schwellen (17) des Gleises (3) zueinander entsprechend ausgebildet ist.

## Claims

1. A welding head (1) for welding rails (2) of a track, having two welding units (6) movable towards one another along unit guides (4) in a guide longitudinal direction (5), each welding unit (6) being equipped at a lower end (7) with clamping jaws (9) provided to be applied to a rail web (8), wherein at least one welding unit (6) is connected to a support device (11), displaceable relative to the welding unit (6), which is provided for placement on the track (3) during working operations, **characterized in that** the support device (11) is designed to be displaceable in the guide longitudinal direction (5) relative to the welding unit (6).

2. A welding head according to claim 1, **characterized in that** the support device (11) is fastened in each case at the lower end (7), adjoining the clamping jaws (9), of each welding unit (6).

3. A welding head according to claim 1 or 2, **characterized in that** each welding unit (6) has two support devices (11) spaced from one another with regard to a unit transverse direction (12) extending perpendicularly to the guide longitudinal direction (5), wherein the clamping jaws (9) are arranged between the two support devices (11).

4. A welding head according to one of claims 1 to 3, **characterized in that** the support device (11) is designed as a sliding rail (16) which, by means of a spring preload, is displaceable automatically from an end position attainable with finishing a welding operation back into an initial position.

5. A welding head according to claim 4, **characterized in that** a displacement path delimited by the initial- and end positions measures at least 150 mm.

6. A welding head according to one of claims 4 or 5, **characterized in that** a length, extending in the guide longitudinal direction (5), of the support device (11) is configured to correspond to at least a distance of two adjacent sleepers (17) of the track (3).

## Revendications

1. Module de soudure (1) pour la soudure de rails (2) d'une voie ferrée, avec deux unités de soudure (6) pouvant être déplacées l'une par rapport à l'autre le long de guides de module (4) dans une direction longitudinale de guidage (5) qui sont équipées chacune à une extrémité inférieure (7) de mâchoires de serrage (9) prévues pour l'appui sur une âme de rail (8), dans lequel au moins une unité de soudure (6) est connectée à un dispositif d'appui (11) prévu lors de l'utilisation en travail pour le support sur la voie ferrée (3), pouvant être coulissé par rapport à l'unité de soudure (6), **caractérisé en ce que** le dispositif d'appui (11) est réalisé de manière à pouvoir être coulissé par rapport à l'unité de soudure (6) dans la direction longitudinale de guidage (5).

2. Module de soudure selon la revendication 1, **caractérisé en ce que** le dispositif d'appui (11) est à chaque fois fixé à l'extrémité inférieure (7) de chaque unité de soudure (6) se raccordant aux mâchoires de serrage (9).

3. Module de soudure selon la revendication 1 ou 2, **caractérisé en ce que** chaque unité de soudure (6) présente deux dispositifs d'appui (11) écartés l'un de l'autre par rapport à une direction transversale de module (12) s'étendant perpendiculairement à la direction longitudinale de guidage (5), dans lequel les mâchoires de serrage (9) sont disposées entre les deux dispositifs d'appui (11).

4. Module de soudure selon une des revendications 1 à 3, **caractérisé en ce que** le dispositif d'appui (11) est réalisé en tant que rail coulissant (16) qui peut être coulissé en retour automatiquement par précontrainte élastique d'une position finale pouvant être atteinte à la fin d'un processus de soudure dans une position de départ.

5. Module de soudure selon la revendication 4, **caractérisé en ce qu'**une course coulissante limitée par la position de départ et finale se monte à au moins 150 mm.

6. Module de soudure selon une des revendications 4 ou 5, **caractérisé en ce qu'**une longueur s'étendant dans la direction longitudinale de guidage (5) du dispositif d'appui (11) est réalisée pour correspondre à au moins un écart entre deux traverses voisines (17) de la voie ferrée (3) l'une par rapport à l'autre.
